# EUROPEAN PATENT APPLICATION

(11) **EP 2 468 527 A1**
(43) Date of publication of application: **27.06.2012**
(21) Application number: 10196660.4
(22) Date of filing: 22.12.2010
(51) Int. Cl.: B60B 3/14, B60B 3/16

(54) **A wheel, an adapter, a kit of parts and a method**

(71) Applicant: Wheelpartners B.V., 3261 MA Oud-Beijerland (NL)
(72) Inventor: Smeding, Derk Marcel, 9256 HG Rijperkerk (NL)
(74) Representative: Jansen, Cornelis Marinus

(57) **Abstract**

The invention relates to a wheel for a vehicle, comprising a central portion attachable to a vehicle hub and a rim arranged radially outside the central portion for supporting a wheel tire. The central portion is provided with a series of cavities for receiving a corresponding adapter. A cavity has a through hole being aligned in an aligning direction with a through hole of a corresponding adapter for being traversed by a mounting element mounting the central portion to the vehicle hub. Further, the cavity geometry is arranged for receiving the corresponding adapter in a unique rotational position with respect to the aligning direction.

## Description

The present invention relates to a wheel for a vehicle, comprising a central portion attachable to a vehicle hub and a rim arranged radially outside the central portion for supporting a wheel tire, wherein the central portion is provided with a series of cavities for receiving a corresponding adapter, wherein a cavity of the series of cavities has a through hole being aligned in an aligning direction with a through hole of a corresponding adapter for being traversed by a mounting element mounting the central portion to the vehicle hub.

International patent publication WO 02/074555 discloses such a wheel. Here, the wheel is mounted to the vehicle hub by inserting a bolt through the through hole of the adapter and the aligned through hole of the cavity into a screw aperture in the vehicle wheel. The through hole in the adapter is placed eccentric. Further, the adapter can rotate in the cavity of the wheel central portion, so that the distance between the adapter through hole and the wheel central axis, also called the pitch circle diameter, can be set. Advantageously, the wheel can be used for mounting to a variety of vehicle hubs having different pitch circle diameters.

Although such a wheel enables adjusting the distance between the through hole in the adapter with respect to the central wheel axis, a number of disadvantages can be identified. The step of adjusting said distance complicates a process of mounting the wheel to a vehicle hub, making it generally too complex for an inexperienced person to perform the steps necessary for properly mounting the wheel. Further, the experienced person has to perform a multiple number of steps, thereby introducing a chance of making errors, e.g. in aligning the through holes of the adapter and the cavity properly, and making that the overall mounting process takes a relatively long time period. Also, during the mounting process or during transport of storage of the wheel, the rotatable adapter can be lost. In addition, the process of balancing the wheel is not accurate.

It is an object of the invention to obtain a wheel according to the preamble wherein at least one of the disadvantages is reduced. In particular, the invention aims at obtaining a wheel according to the preamble wherein the mounting process is simplified. Thereto, according to the invention, the cavity geometry is arranged for receiving the corresponding adapter in a unique rotational position with respect to the aligning direction.

By providing a cavity geometry that receives the adapter in a unique rotation position, the adapter can be moved into the cavity in a single angular position only, so that the mounting process simplifies. Also an inexperienced person may mount the wheel to the vehicle hub. In addition, due to the simplified step of inserting the adapters, the process of mounting the wheel speeds up.

The invention is at least partly based on the insight that the pitch circle diameter can be set by selecting another adapter type, having a through hole that is located at another location in the adapter.

The invention also relates to an adapter.

Further, the invention relates to a kit of parts.

The invention also relates to a method.

Other advantageous embodiments according to the invention are described in the following claims.

By way of example only, embodiments of the present invention will now be described with reference to the accompanying figures in which
Fig. 1 shows a schematic cross section view of a wheel according to the invention;
Fig. 2A shows a schematic perspective front view of a central portion of a wheel shown in Fig. 1;
Fig. 2B shows a schematic perspective back view of a central portion of a wheel shown in Fig. 1;
Fig. 3A shows a schematic view of a first embodiment of an adapter according to the invention;
Fig. 3B shows a schematic view of a second embodiment of an adapter according to the invention;
Fig. 3C shows a schematic perspective front view of the adapter shown in Fig. 3B; and
Fig. 3D shows a schematic perspective back view of the adapter shown in Fig. 3B.

It is noted that the figures show merely preferred embodiments according to the invention. In the figures, the same reference numbers refer to equal or corresponding parts.

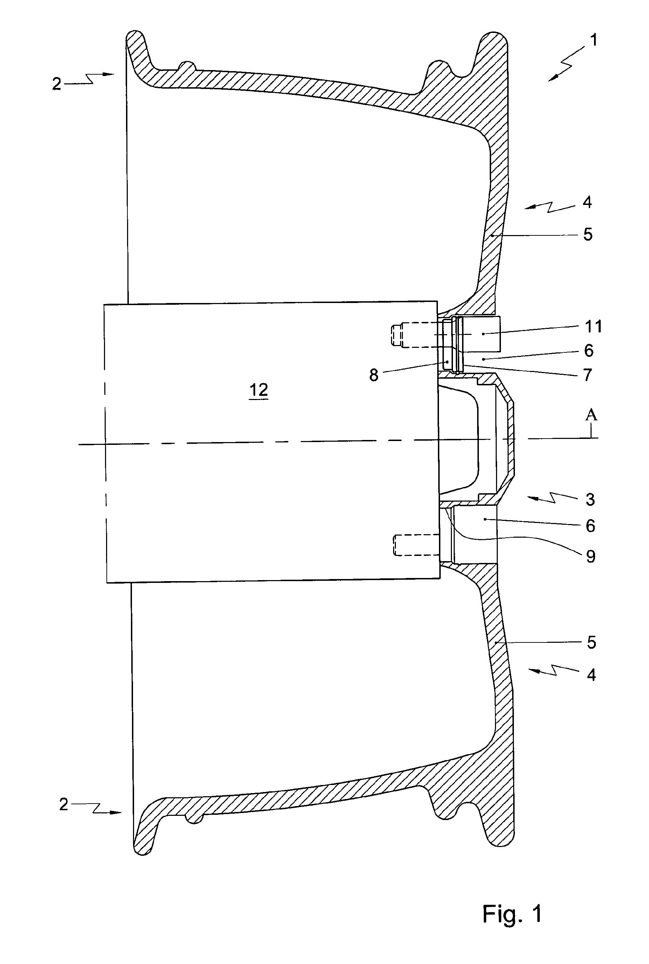

Figure 1 shows a schematic cross section view of a wheel 1 according to the invention. The wheel 1 comprises a central portion 3 and a rim 2. The central portion 3 is to be attached to a vehicle hub 12 having a central axis A. Further, the rim 2 is arranged radially outside the central portion 3 for supporting a wheel tire (not shown).

The wheel 1 also includes an intermediate portion 4 interconnecting the rim 2 to the central portion 3. The intermediate portion 4 can be formed by a plurality of spokes 5, as shown in Fig. 1. Alternatively, the intermediate portion 4 is formed by a ring shaped segment. Further, in principle, the central portion 3 can directly be connected to the rim 2.

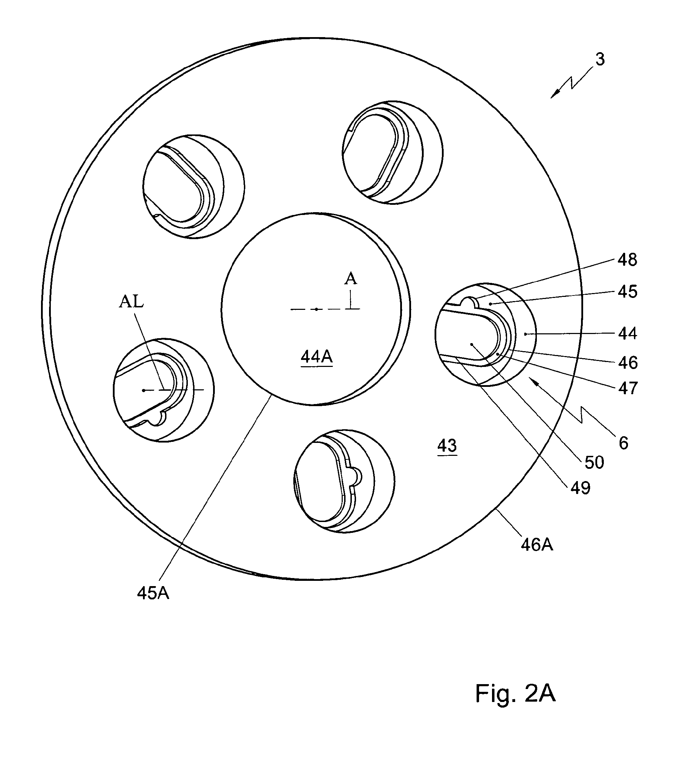

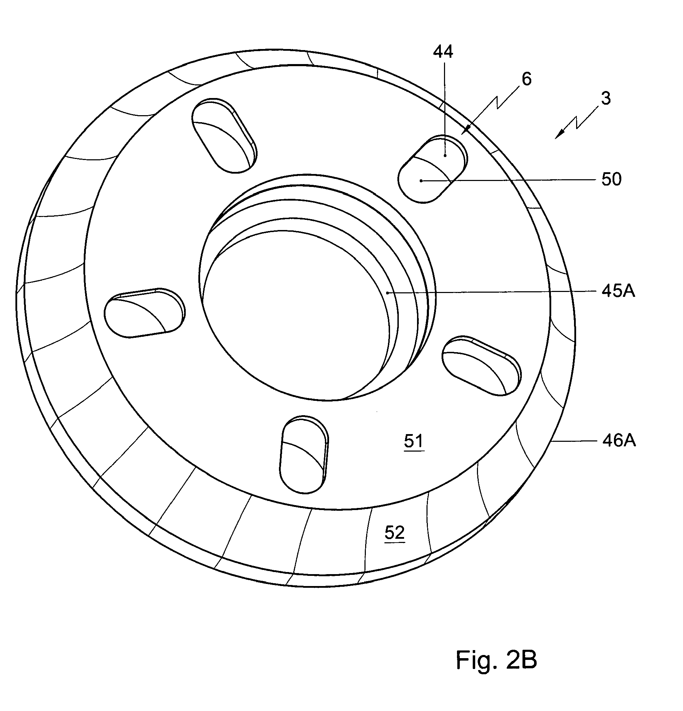

Figures 2A and 2B show schematic perspective front and back views, respectively, of the central portion 3 of the wheel 1 shown in Fig. 1. The central portion 3 is provided with a series of cavities 6 for receiving a corresponding adapter (not shown in Fig. 2A). In the shown embodiment, the cavities are arranged at a fixed radial distance with respect to the central axis A and distributed in a circumferential direction. Each cavity 6 has a through hole 50 that is aligned in an aligning direction AL parallel to the central axis A.

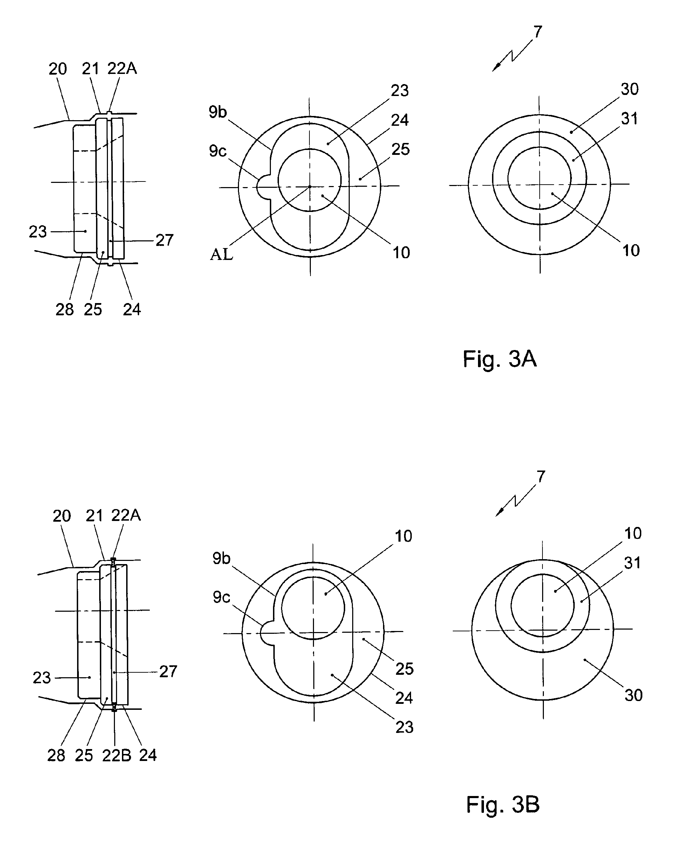

Figure 3A shows a schematic view of a first embodiment of an adapter 7 according to the invention. The adapter 7 is also provided with a through hole 10 that is aligned with the cavity through hole 50 when the adapter 7 is received in the cavity 6. The cavity geometry is arranged for receiving the corresponding adapter 7 in a unique rotational position with respect to the aligning direction AL. In a mounted state of the wheel 1, a mounting element traverses the adapter through hole 10 and the cavity through hole 50 for fixing the wheel 1 to the vehicle hub 12.

The central portion 3 is mainly formed as a ring having an inner rim 45A surrounding a central aperture 44A and having an outer rim 46A. In an alternative embodiment, the central portion has another shape, e.g. a disc. Further, the outer rim 46A can be formed otherwise, e.g. as a polygon. The shown central portion 3 has a generally flat structure having a front side surface 43 and a back side surface 51. The outer rim 46A includes a bevelled surface 52 at the back side. In principle, the central portion 3 may include curved portions, e.g. a portion at least partially surrounding the vehicle hub. Also, the aligning direction AL of the cavity through hole 50 and the adapter through hole 10 may intersect the central axis A. As an example, in principle, the aligning direction AL might be transverse with respect to the central axis, such that the mounting element traversing the through holes 10, 50 engages the vehicle hub 12 in a radial direction, transverse to the central axis A.

The cavity 6 includes a first volume and a second volume. The first volume is mainly shaped as a cylinder, preferably having a constant cross section and more preferably shaped as a disc, and is radially surrounded by first radial wall portion 21, 44, in the shown embodiment forming a circular contour. The first volume is axially bounded by a first receiving wall portion 45 receiving the adapter 7. The first receiving wall portion 45 extends mainly parallel to the front surface 43 of the central portion 3. The second cavity volume is also mainly shaped as a cylinder, preferably having a constant cross section. The second cavity volume extends from the first cavity volume in the aligning direction AL, towards the back side surface 51. The second cavity volume is radially surrounded by a second radial wall portion 46 forming a rotationally asymmetric contour. The second radial wall portion 46 includes a radially outwardly extending portion 48. Further, the second cavity volume is axially bounded by a second receiving wall portion 47 forming a recess in the first receiving wall portion 45. In the second receiving wall portion 47 of the cavity 6, the through hole 50 is formed being radially surrounded by a hole wall 49.

It is noted that, as an alternative, the second radial wall portion 46 includes a radially inwardly extending portion. Further, a multiple number of radially inwardly or outwardly extending portions can be applied.

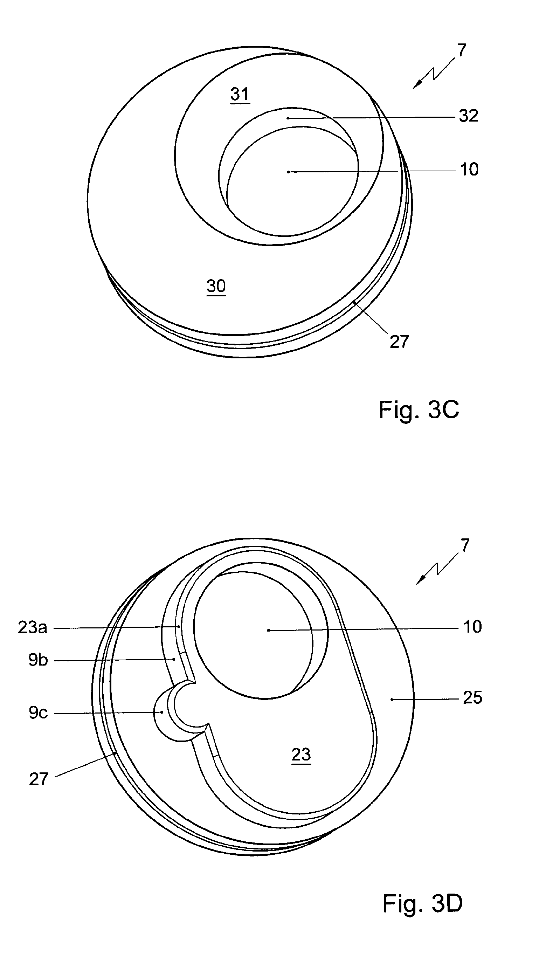

Figure 3B shows a schematic view of a second embodiment of an adapter according to the invention. Further, Figures 3C and 3D show a schematic perspective front view and back view, respectively, of the adapter 7 shown in Fig. 3B.

The adapter 7 in the first and second embodiment includes two body portions, both shaped as a cylinder, and matching the two volume geometry of the cavity 6. The first body portion is shaped as a disc 25 while the second body portion 23 has a rotationally asymmetric contour 9b, 28 matching the contour of the second radial wall portion 20, 46. Similarly, the contour of the second body portion 23 includes a radially outwardly extending section 9c. The first and the second body portions have each a substantially constant cross section and are preferably integrally formed. Further, the second body portion 23 extends axially from the first body portion 25 and is located radially within the periphery of the disc 25. The adapter further includes a through hole 10 formed inside the first and second body portion 23, 25. The aligning orientation AL of the adapter through hole 10 is parallel with the longitudinal axis of the first and second cylinder. The through hole 10 is surrounded by an adapter inner wall 32. At the front side of the first body 25, the front surface 30 includes a bevelled section 31 for receiving a head portion of the mounting element extending through the through holes 10, 50.

By matching the geometry of the cavity 6 to the geometry of the corresponding adapter 7, the adapter can be fixed in a unique rotation position with respect to the aligning direction AL. A wall segment of the cavity, e.g. the second radial wall portion 46, is arranged for blocking the received adapter against rotational movement. The adapter fits only in the cavity when rotated over a single or a multiple times of 360°. In an axial view, the wall segment 46 encloses a substantially elongated area, such as a rectangle having rounded corners, or an ellipse. Further, the wall segment might enclose an irregular formed area.

When the adapter 7 is received in the corresponding cavity 6, the two adapter body portions abut against the first receiving wall portion 45 and the second receiving wall portion 47.

The dimensions of the cavity through hole 50 are larger than the dimensions of the adapter through hole 10. Therefore, the position of the adapter through hole 10 may vary while the mounting element may still traverse both through holes 10, 50.

Figures 3A and 3B shows at the right hand side a front view, in the middle a back view of the adapter, respectively, and on the left hand side a cross sectional side view of the adapter being received in the cavity.

According to an aspect of the invention, a multiple number of adapters is provided having different through hole positions forming a kit of parts. In the embodiment shown in Fig. 3A, the through hole 10 is located somewhere in the centre of the adapter, while in the embodiment shown in Fig. 3B, the through hole 10 is located in a more eccentric position. By selecting an adapter having the through hole at a specific location, the distance between the through hole and the central axis A, the pitch circle diameter can be set.

As an example, in case of a vehicle hub having a diameter of 143 mm, a pitch circle diameter can be set of 98, 100, 105, 108, 110, 112, 114.3, 118 or 120 mm. Similarly, in case of a vehicle hub having a diameter of 152 mm, a pitch circle diameter can be set of 118, 120, 127 or 130 mm.

Such a kit of parts might includes two, three, four, five or more adapters having different hole positions and forming a set of adapters. The kit might include a multiple number of sets of adapters, the multiple number corresponding to the number of cavities in the wheel. Further, the kit might includes four times the multiple number of sets of adapters, so that four wheels can be prepared for mounting to a vehicle. In the example of five cavities in the wheel, twenty sets of adapters are needed for mounting the wheels. Further, the set of adapters might include a single adapter, so that for each cavity one adapter is available in the kit of adapters. Also, a single or a multiple number of spare adapters might be included in the kit of parts. In addition the kit of parts might include a wheel and a set of adapters that can be received in the cavities of the wheel.

According to an aspect of the invention, adapters having the hole at an identical location can be provided with means for recognizing them as such, e.g. by providing them with an identification colour.

Advantageously, the radial outer periphery 24 of the first body portion 25 is provided with a groove 27 extending in a circumferential direction for receiving a locking ring 22B for locking the adapter in the aligning direction AL. Accordingly, the first radial wall portion 44, 21 of the cavity 6 includes a corresponding groove 22A, as shown in Fig. 3A and 3B. By axially locking the adapter 7, it is counteracted that the adapter unintentionally leaves the wheel 1. Further, since the adapter is fixed, the wheel balancing process can be performed accurately.

Preferably, at least one edge between a radial wall portion and a receiving wall portion is bevelled to enhance transfer of contact forces between the adapter 7 and the central portion 3. Accordingly, such a bevelled edge corresponds to a bevelled edge of the adapter 7. As an example, Fig. 3D shows a bevelled surface 23A arranged between an end face of the second body portion 23 and a side contour 9b radially surrounding the second body portion 23.

Further, the first radial wall portion 44 and the second radial wall portion 46 can be tapered to facilitate a step of inserting the adapter in the corresponding cavity.

According to an aspect of the invention, there is provided a method for preparing a wheel for attachment to a vehicle hub. The method includes the steps of providing a wheel for a vehicle, comprising a central portion attachable to a vehicle hub and a rim arranged radially outside the central portion for supporting a wheel tire, wherein the central portion is provided with a series of cavities for receiving a corresponding adapter, wherein a cavity of the series of cavities has a through hole having an alignment direction, providing an adapter having a through hole, wherein the adapter has a geometry arranging the adapter for being received in a corresponding cavity in a unique rotational position with respect to the aligning direction, and moving the adapter into the corresponding cavity along the alignment direction.

It will be understood that the above described embodiments of the invention are exemplary only and that other embodiments are possible without departing from the scope of the present invention. It will be understood that many variants are possible.

As an example, the through hole of the cavity can be provided with the same contour as the second radial wall portion surrounding the second body portion of the adapter. Further, the adapter can be provided with a single cylindrical body portion having a rotationally asymmetric contour so that the adapter is received in a unique rotation position with respect to the aligning direction.

Such variants will be apparent to the person skilled in the art and are considered to fall within the scope of the invention as defined in the following claims.

## Claims

1. A wheel for a vehicle, comprising a central portion attachable to a vehicle hub and a rim arranged radially outside the central portion for supporting a wheel tire, wherein the central portion is provided with a series of cavities for receiving a corresponding adapter, wherein a cavity of the series of cavities has a through hole being aligned in an aligning direction with a through hole of a corresponding adapter for being traversed by a mounting element mounting the central portion to the vehicle hub, wherein the cavity geometry is arranged for receiving the corresponding adapter in a unique rotational position with respect to the aligning direction.

2. A wheel according to claim 1, wherein the wall defining the cavity includes a wall segment being arranged for blocking the corresponding adapter against rotational movement.

3. A wheel according to claim 2, wherein the wall segment defines a cavity volume extending away from a front side of the wheel central portion, and corresponding to a protruding portion contour of the adapter.

4. A wheel according to any of the preceding claims, wherein the wall segment has a rotationally asymmetric contour.

5. A wheel according to any of the preceding claims, wherein the wall segment encloses a substantially elongated area.

6. A wheel according to any of the preceding claims, wherein the wall segment has a contour including a radially inwardly or outwardly extending portion.

7. A wheel according to any of the preceding claims, wherein the dimensions of the cavity through hole are larger than the dimensions of the adapter through hole.

8. An adapter for being received in a cavity of a series of cavities provided in a central portion of a vehicle wheel, the adapter having a through hole for aligning in an aligning direction with a through hole provided in a corresponding cavity for being traversed by a mounting element mounting the central portion to a vehicle hub, wherein the adapter has a geometry arranging the adapter for being received in the corresponding cavity in a unique rotational position with respect to the aligning direction.

9. An adapter according to claim 8, having a mainly disc shaped body provided with a portion protruding in an axial direction of the disc.

10. An adapter according to any of the preceding claims 8 or 9, wherein the through hole is oriented parallel to the axial direction of the adapter.

11. An adapter according to any of the preceding claims 8-10, wherein the through hole extends through the protruding portion.

12. An adapter according to any of the preceding claims 8-11, wherein the through hole is arranged in a central or eccentric position.

13. An adapter according to any of the preceding claims 8-12, including a groove extending in a circumferential direction for receiving a locking ring for locking the adapter in the axial direction.

14. A kit of parts, including a multiple number of adapters for being received in cavities of a series of cavities provided in a central portion of a vehicle wheel, the adapters having a through hole for aligning in an aligning direction with a through hole provided in a corresponding cavity for being traversed by a mounting element mounting the central portion to a vehicle hub, wherein the adapters have a geometry arranging the adapters for being received in the corresponding cavities in a unique rotational position with respect to the aligning direction.

15. A method for preparing a wheel for attachment to a vehicle hub, comprising:
- providing a wheel for a vehicle, comprising a central portion attachable to a vehicle hub and a rim arranged radially outside the central portion for supporting a wheel tire, wherein the central portion is provided with a series of cavities for receiving a corresponding adapter, wherein a cavity of the series of cavities has a through hole having an alignment direction;
- providing an adapter having a through hole, wherein the adapter has a geometry arranging the adapter for being received in a corresponding cavity in a unique rotational position with respect to the aligning direction, and
- moving the adapter into the corresponding cavity along the alignment direction.
